# EUROPEAN PATENT SPECIFICATION

(11) **EP 1 566 158 B1**
(45) Date of publication and mention of the grant of the patent: **25.04.2012**
(21) Application number: 05250919.7
(22) Date of filing: 17.02.2005
(51) Int. Cl.: A61G 5/04, B62K 5/00

(54) **Small-sized electric vehicle**
Kleinelektrofahrzeug
Véhicule électrique de faible encombrement

(30) Priority: 20.02.2004 JP 2004044569; 20.02.2004 JP 2004044570; 20.02.2004 JP 2004044571
(43) Date of publication of application: 24.08.2005
(73) Proprietor: HONDA MOTOR CO., LTD., Tokyo (JP)
(72) Inventor: Yasuda, Toyoshi, c/o Kabushiki Kaisha Honda, Wako-shi Saitama (JP); Ichikawa, Katsuhisa, c/o Kabushiki Kaisha Honda, Wako-shi Saitama (JP); Minato, Kazuhiro, c/o Kabushiki Kaisha Honda, Wako-shi Saitama (JP); Miyahara, Kazuyoshi, c/o Kabushiki Kaisha Honda, Wako-shi Saitama (JP)
(74) Representative: Taylor, Adam David

(56) References cited:
- EP-A- 0 916 525
- EP-A2- 0 485 732
- DE-A1- 4 207 051
- DE-C- 884 608
- FR-A1- 2 764 546
- JP-A- 5 008 782
- JP-U- 56 056 484
- JP-U- 59 116 202
- US-A1- 2003 163 911
- US-B1- 6 672 606

## Description

The present invention relates to an improvement in a small-sized electric vehicle in which a power unit constructed by connecting an electric motor, a speed reduction device and a differential device in succession is supported on a vehicle body frame via a suspension system, and right and left rear wheels are secured to right and left rear axles connected to an output part of the differential device.

A conventional small-sized electric vehicle is known in which a support frame for supporting a power unit and right and left rear wheels is connected to a vehicle body frame so as to be pivotable around two axis lines perpendicular to each other, that is, a longitudinal axis line and a lateral axis line, and damping and rolling returning springs are interposed between the vehicle body frame and a rear wheel support frame, thereby allowing vertical movement and rolling of the right and left rear wheels. Such a vehicle is disclosed, for example, in Japanese Patent Application Laid-open No. 5-8782.

In the above-described conventional small-sized electric vehicle, a suspension system for supporting the power unit and the rear wheels includes the support frame, longitudinal and lateral shafts for pivotally supporting the support frame, and damping and rolling return springs, so that the construction of the suspension system is complicated, leading to difficulty in reducing the cost and size.

The present invention has been achieved in view of the above-mentioned circumstances, and has an object to provide an inexpensive and compact small-sized electric vehicle having a simple construction of a suspension system enabling vertical movement and rolling of right and left rear wheels.

JP 356056484 U discloses a small sized electric vehicle as set out in the preamble of claim 1.

The present invention provides a small-sized electric vehicle in which a power unit having an electric motor and a speed reduction device is supported on a vehicle body frame via a suspension system to drive right and left rear wheels while supporting them, wherein the power unit is constructed by connecting the electric motor, the speed reduction device and a differential device in succession; wherein the right and left rear wheels are secured to right and left rear axles connected to an output part of the differential device; and wherein the suspension system is constructed by a pair of right and left plate springs whose front end parts are fixed and cantilevered by the vehicle body frame, a casing for the power unit being mounted and supported on an upper surface in the rear end part of the plate springs so that the driving reaction force of the power unit is only borne by the plate springs, whereby the right and left plate springs are arranged so that a space therebetween increases toward the rear.

With the arrangement of the present invention, the right and left rear wheels can be moved vertically by the deflection of the plate springs cantilevered by the vehicle body frame, an impact force received by the rear wheels from a bumpy road surface can be absorbed by the plate springs, and the rolling of the right and left rear wheels can be achieved by the torsion of the plate springs. Therefore, the ground-contact state of both the rear wheels can be maintained even at the time of rolling of the vehicle body.

In addition, the plate springs also serve as a member for supporting the power unit, which can contribute to the simplification of construction of the small-sized electric vehicle and hence the reduction in weight and cost thereof.

Further, since the power unit is mounted to the rear end parts of the pair of right and left plate springs where the space therebetween is the largest, the power unit functions effectively as a stabilizer to suppress excessive vertical vibration of each rear wheel, and even when the vehicle is running on a bumpy road surface, the ground-contact property of both the rear wheels can be enhanced. For this reason, relatively thin plate springs can be used, which can contribute to reduction inweight of the suspension system.

Still further, the right and left plate springs arranged in a chevron shape in the plan view cooperate with the vehicle body frame and the power unit to form a closed trapezoidal structure, which exerts a high rigidity against a lateral load, so that a high drag can be achieved against a lateral load acting on the rear wheels.

According to the present invention, a casing for the power unit is mounted to the rear end parts of the pair of plate springs so that the driving reaction force of the power unit is borne by the plate springs.

With this arrangement, the plate springs serve not only as members for supporting the power unit but also as members for bearing the driving reaction force, so that the construction of the small-sized electric vehicle can be further simplified. In addition, since bending moment received by the plate springs due to the weights of the vehicle body and the driver as well as the reaction force received by the rear wheels from a road surface, and bending moment received by the plate springs due to the driving reaction force of the power unit, have directions opposite from each other, the total bending moment received by the plate springs is small, which can reduce the load on the plate spring.

According to the present invention, the power unit is constructed by connecting the electric motor, the speed reduction device and a differential device in succession, and the right and left rear wheels are secured to right and left rear axles connected to an output part of the differential device. With this arrangement, the weight of the vehicle body and of the driver as well as the reaction force received by the rear wheels from the road surface are borne by the plate spring connecting the rear wheels to the vehicle body frame; and when the rear wheels are driven by the power of the power unit, the driving reaction force is also borne by the plate spring mounting and supporting the power unit in the rear end part thereof. Therefore, the plate spring serves not only as a member for supporting the power unit but also as a member for receiving the driving reaction force, which can contribute to the simplification of construction of the small-sized electric vehicle and hence the reduction in weight and cost thereof.

Also, the right and left rear wheels can be moved vertically by the deflection of the plate spring, an impact force received by the rear wheels from a bumpy road surface can be absorbed by the plate spring, and rolling of the right and left rear wheels can be achieved by the torsion of the plate spring. Therefore, the ground-contact state of both the rear wheels can be maintained even at the time of rolling of the vehicle body.

Further, the bending moment received by the plate spring due to the weights of the vehicle body and the driver as well as the reaction force received by the rear wheels from a road surface, and the bending moment received by the plate spring due to the driving reaction force of the power unit, have directions opposite from each other. Therefore, the total bending moment received by the plate spring is small, which can reduce the load on the plate spring.

In addition to the above feature, according to a preferred embodiment of the present invention, a pair of right and left axle cases which support the rear axles and form a part of the casing are disposed on the opposite sides of the differential device, the rear end parts of the pair of plate springs being connected to the axle cases.

With this arrangement, since the rear end parts of the pair of right and left plate springs are connected to the right and left axle cases holding the differential device therebetween, a span between the connection points can be sufficiently secured. Therefore, the casing including the right and left axle cases functions effectively as a stabilizer to suppress excessive vertical vibration of each rear wheel, and even when the vehicle is running on a bumpy road surface, the ground-contact property of both the rear wheels can be enhanced.

The power unit may be mounted and supported on an upper surface in the rear end part of the plate spring.

With this arrangement, during the running, the power unit above the plate springs can be protected from stones jumping-up or muddy water coming from a road surface.

According to a further preferred embodiment of the present invention, the casing for the power unit is mounted to the plate spring via a damping member so that the driving reaction force of the power unit is borne by the plate spring.

With this arrangement, the right and left rear wheels can be moved vertically by the deflection of the plate springs supported on the vehicle body frame, an impact force received by the rear wheels from a bumpy road surface can be absorbed by the plate springs, and the rolling of the right and left rear wheels can be achieved by the torsion of the plate spring. Therefore, the ground-contact state of both the rear wheels can be maintained even at the time of rolling of the vehicle body. At the same time, high-frequency vibrations received by the rear wheels from a road surface are absorbed by the damping member interposed between the plate spring and the casing, which can give good riding comfort to the driver.

In addition, the plate spring serves not only as a member for supporting the power unit but also as a member for bearing the driving reaction force, which can contribute to the simplification of construction of the suspension system and hence the reduction in weight and cost thereof.

A preferred embodiment of the invention will be described by way of example and with reference to the accompanying drawings in which:
FIG. 1 is a side view of a small-sized electric vehicle in accordance with the present invention.
FIG. 2 is a sectional view taken along the line 2-2 of FIG. 1.
FIG. 3 is a sectional view taken along the line 3-3 of FIG. 2.
FIG. 4 is a sectional view taken along the line 4-4 of FIG. 2.
FIG. 5 is a sectional view taken along the line 5-5 of FIG. 2.
FIG. 6 is a sectional view taken along the line 6-6 of FIG. 4.

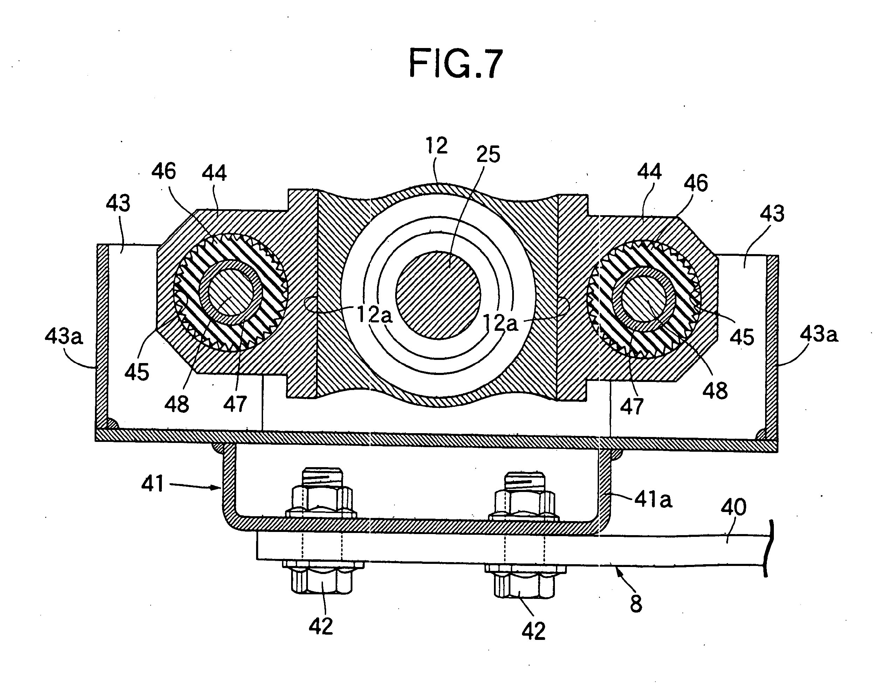

FIG. 7 is a sectional view taken along the line 7-7 of FIG. 4.
FIG. 8 is a sectional view taken along the line 8-8 of FIG. 6.

A preferred embodiment of the present invention will now be described with reference to the accompanying drawings.

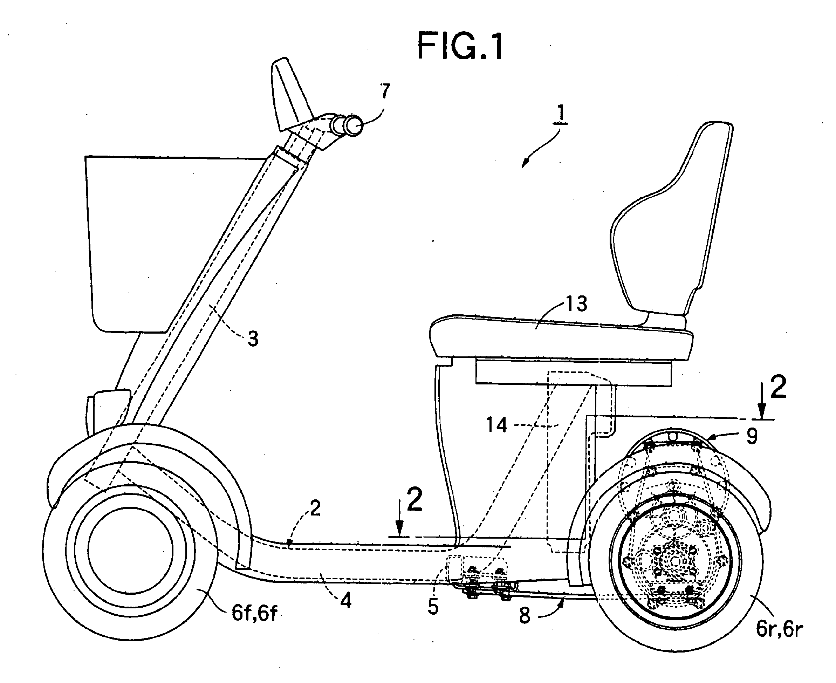

First, in FIG. 1, a vehicle body frame 2 of a small-sized electric vehicle 1 includes: a handle column 3; a pair of right and left main pipes 4 which extend rearward from a lower end part of the handle column 3 and then bend upward slantwise in the rear end part thereof; and a cross member 5 for connecting the main pipes 4 to each other just in front of the upwardly bent portion. A pair of right and left front wheels 6f, 6f are turnably mounted to front parts of the main pipes 4. An operation handlebar 7 for controlling the turn of the front wheels 6f, 6f is pivotally supported on the handle column 3. A power unit 9 is supported on the cross member 5 via a suspension system 8, and supports a pair of right and left rear wheels 6r, 6r. The right and left rear wheels 6r, 6r are arranged with substantially the same space therebetween as the lateral space between the right and left main pipes 4 being provided. A seat 13 is mounted on rear end parts of the bent portions of the main pipes 4. A battery 14 capable of being charged by a commercial power source is provided just under the seat 13.

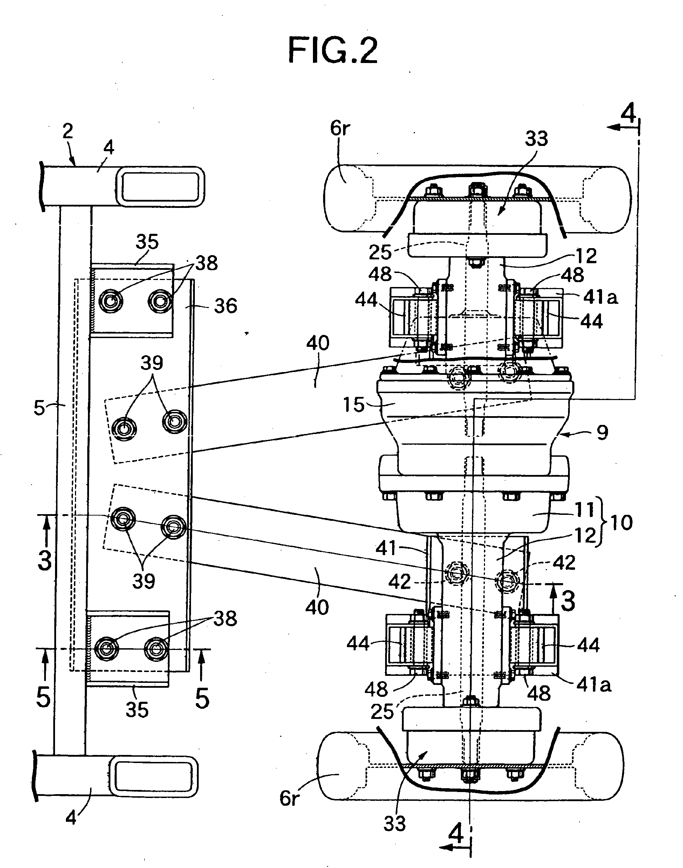

As shown in FIGS. 2 to 4, a casing 10 for the power unit 9 includes a reduction case 11 and a pair of right and left axle cases 12, 12 projectingly provided integrally with both right and left side walls in a lower part of the reduction case 11. An electric motor 15, which is powered by the battery 14, is installed to one side in the lateral direction of an upper part of the reduction case 11. An output shaft 15a of the electric motor 15 is arranged so that a pinion gear 16 formed at the tip end of the output shaft 15a enters the reduction case 11.

In the reduction case 11, a differential case 17 for a differential device 29 is arranged coaxially with the right and left axle cases 12, 12, and both right and left end parts of the differential case 17 are rotatably supported on the reduction case 11 via ball bearings 18, 18. A large-diameter final gear 20 is spline-connected to the differential case 17. Also, in the reduction case 11, an intermediate transmission shaft 21 is disposed in an intermediate portion between the output shaft 15a and the axle cases 12, and both right and left end parts of the intermediate transmission shaft 21 are rotatably supported on the reduction case 11 via ball bearings 22, 22. On the intermediate transmission shaft 21, a large-diameter gear 19a meshing with the pinion gear 16 and a small-diameter gear 19b meshing with the final gear 20 are fixedly provided. The pinion gear 16, the large-diameter gear 19a, the small-diameter gear 19b, and the final gear 20 constitute a speed reduction device 23 which transmits the rotation of the output shaft 15a of the electric motor 15 to the differential device 29 at a certain speed reduction ratio.

Right and left rear axles 25, 25 penetrating the right and left axle cases 12, 12 are relatively rotatably supported on the inner peripheral surfaces of the opposite end parts of the differential case 17. Side gears 26, 26 are spline-connected to the inner end parts of the rear axles 25, 25, which enter the differential case 17. Also, a pinion shaft 27 perpendicular to the rotating axis line of the differential case 17 is mounted in the differential case 17, and a pair of pinion gears 28, 28 meshing with the side gears 26, 26 are rotatably supported on the pinion shaft 27. The differential case 17, the pinion gears 28, 28, and the side gears 26, 26 constitute a differential device 29 for distributing the rotation of the final gear 20 to the right and left rear axles 25, 25.

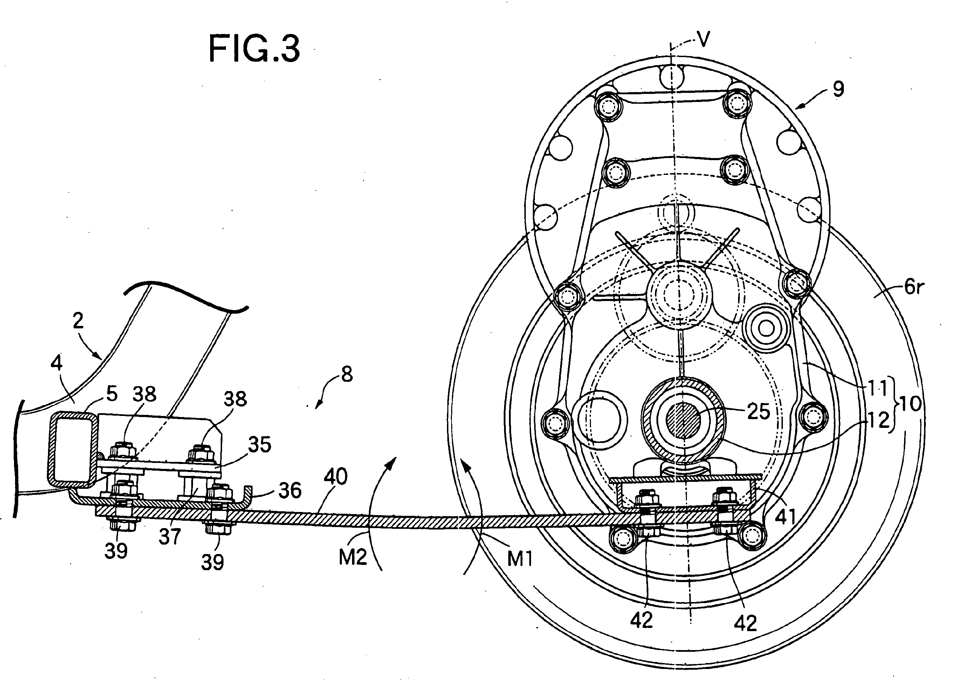

In the above-described configuration, the casing 10, the electric motor 15, the speed reduction device 23, and the differential device 29, which constitute the power unit 9, are arranged so as to have a substantially symmetric construction in the longitudinal direction with respect to the vertical surface V including the rotating axis lines of the axle cases 12, 12 (see FIG. 3).

The right and left rear axles 25, 25 are supported by the outer end parts of the right and left axle cases 12, 12 via ball bearings 30, 30. Oil seals 31, 31 are interposed between the rear axles 25, 25 and the axle cases 12, 12 at positions between the ball bearings 30, 30 and the ball bearings 18, 18. The right and left rear wheels 6r, 6r are spline-connected to the tip ends of the right and left rear axles 25, 25 protruding from the outer ends of the right and left axle cases 12, 12, and are fixed with nuts 32, 32. Thus, the right and left rear wheels 6r, 6r are supported on the axle cases 12, 12. Between each of the rear wheel 6r and the corresponding axle case 12, a drum brake 33 of a known type is provided for braking the rear wheel 6r.

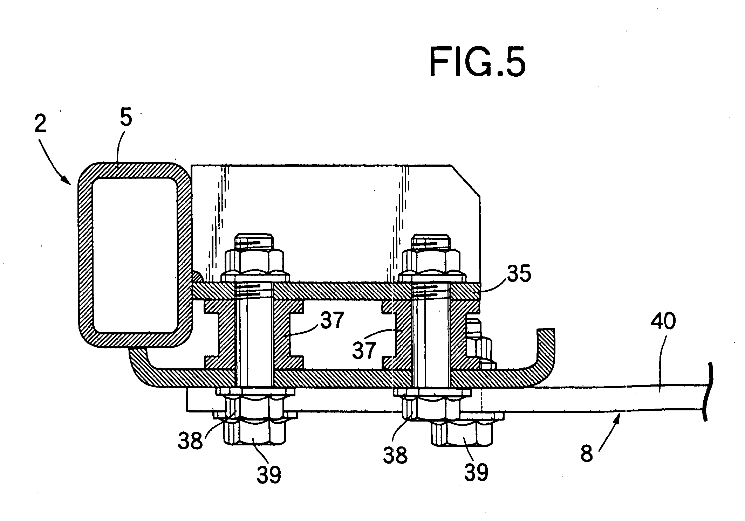

In FIGS. 2, 3 and 5, a pair of stays 35, 35 protruding rearward are provided in portions close to the right and left main pipes 4, 4 of the cross member 5. Both right and left end parts of a support plate 36 are superposed on the lower surfaces of the stays 35, 35, with a collar 37 held therebetween, and are fixed with bolts 38.

The suspension system 8 has a pair of cantilevered right and left plate springs 40, 40 whose front end parts are fixed to the support plate 36 with bolts 39. The plate springs 40, 40 are arranged with a space provided therebetween, and in particular, are formed into a chevron shape in the plan view so that the space increases toward the rear.

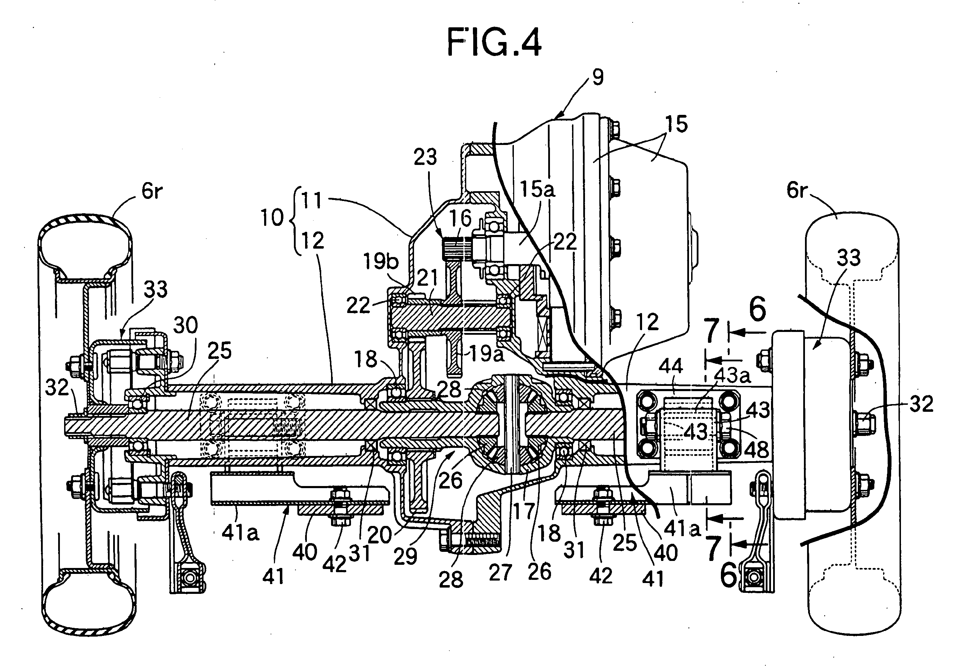

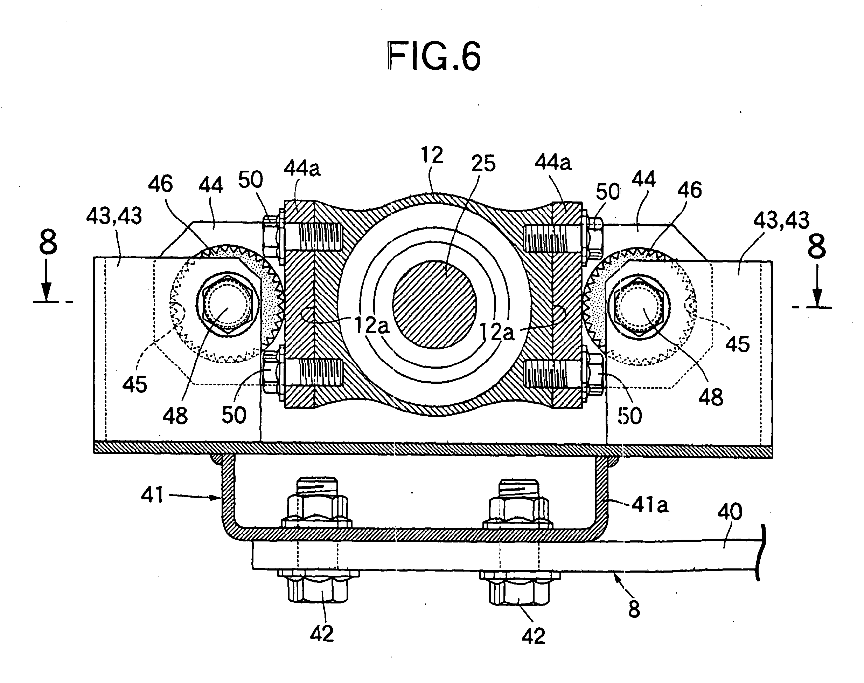

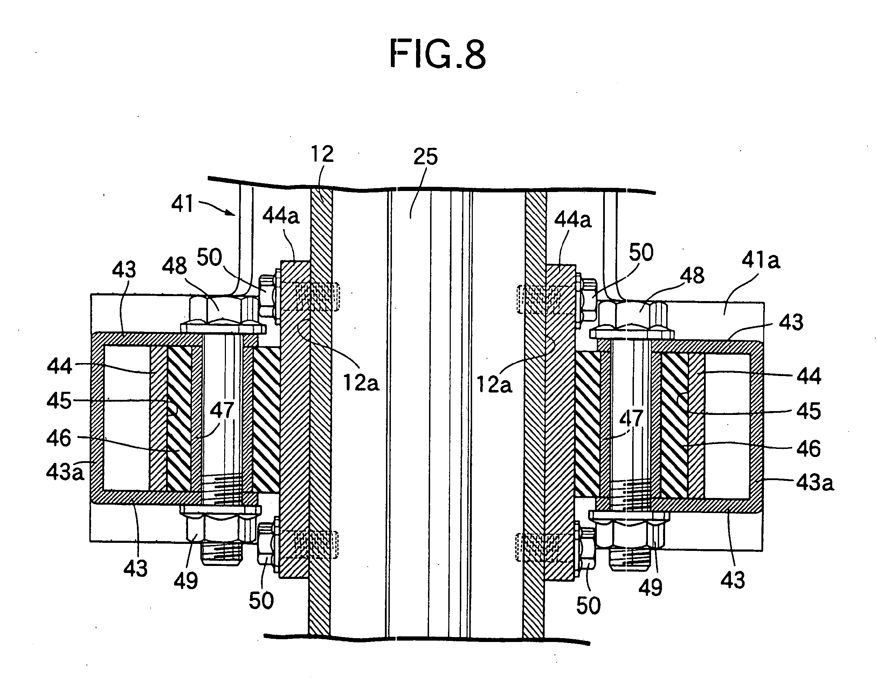

As shown in FIGS. 4, 6 and 8, a pair of right and left brackets 41, 41 are fixed to on the upper surfaces in the rear end parts of the plate springs 40, 40 with bolts 42. Each of the brackets 41, 41 has a projecting portion 41a protruding in the laterally outward direction from the corresponding plate spring 40 (see FIG. 4). The projecting portions 41a are formed with two sets of mounting walls 43, 43, 43, 43 which rise upward to form a set by facing each other in the lateral direction, and connection walls 43a for integrally connecting the outside ends of each set of mounting walls 43, 43 to each other. Between each set of the mounting walls 43, 43, a support block 44 for supporting the corresponding axle case 12 is installed as described below.

On the inner peripheral surface of a support hole 45 provided in the support block 44, a cylindrical damping member 46 formed of an elastic material such as rubber is fitted. A collar 47 is baked on the inner peripheral surface of the damping member 46. The outer peripheral surface of the damping member 46 fitted in the support hole 45 is formed into a serration-shaped uneven surface to enhance the damping effect. The support block 44 is inserted between the corresponding pair of mountingwalls 43, 43. The collar 47 is supported by a bolt 48 whose opposite ends are supported by the mounting walls 43, 43, and the bolt 48 is fixed to both the mounting walls 43, 43 with a nut 49 screwed on the bolt 48.

Each of the support blocks 44 is integrally provided with a pair of front and rear collar portions 44a, 44a which are superposed on a pair of front and rear flat surfaces 12a, 12a of the outer surface of the corresponding axle case 12, and the collar portions 44a, 44a are fixed to the axle case 12 with bolts 50.

Thus, the power unit 9 is mounted and supported on the rear end parts, namely, the upper surfaces of free end parts of the pair of right and left plate springs 40, 40 cantilevered by the vehicle body frame 2.

Next, the operation of this embodiment will be explained.

When the electric motor 15 is operated by power supply from the battery 14, the power is transmitted from the output shaft 15a through the speed reduction device 23 to the differential device 29, and is distributed to the right and left rear axles 25, 25 to drive the right and left rear wheels 6r, 6r, whereby the small-sized electric vehicle 1 can run.

The weight of the vehicle body and of the driver as well as the reaction force received by the rear wheels 6r, 6r from the road surface, are borne by the right and left plate springs 40, 40 connecting the rear wheels 6r, 6r to the vehicle body frame 2, and when the rear wheels 6r, 6r are driven by the power of the power unit 9, the driving reaction force thereof is also borne by the right and left plate springs 40, 40 supporting the power unit 9. Therefore, the plate springs 40, 40 serve not only as a member for supporting the power unit 9 but also as a member for receiving the driving reaction force, which can contribute to the simplification of construction of the suspension system 8 and hence the reduction in weight and cost of the small-sized electric vehicle 1.

In addition, as shown in FIG. 3, the bending moment M1 received by the plate springs 40, 40 due to the weights of the vehicle body and the driver as well as the reaction force received by the rear wheels 6r, 6r from a road surface, and the bending moment M2 received by the plate springs 40, 40 due to the driving reaction force of the power unit 9, have directions opposite from each other, so that the total bending moment received by the plate springs 40, 40 is small to be (M1 - M2), which can reduce the load on the plate springs 40, 40.

During the running, a large impact force received by the rear wheels 6r, 6r from a bumpy road surface is absorbed by the vertical deflection of the plate springs 40, 40. Also, high-frequency vibrations received by the rear wheels 6r, 6r from a road surface are absorbed by the radially compressed deformation of the cylindrical damping member 46 interposed between the bolt 48 fixed to the plate springs 40, 40 via the brackets 41, 41 and the support block 44 fixed to the casing 10 for the power unit 9. In particular, since the serration-shaped outer peripheral surface of the damping member 46 has flexibility, the high-frequency vibrations are absorbed effectively, which can give good riding comfort to the driver.

At the time of vehicle body roll, the axle cases 12, 12 supporting the rear axles 25, 25, namely, the casing 10 for the power unit 9 gives torsional deformation to the plate springs 40, 40 while swinging vertically, whereby the ground-contact state of both the rear wheels 6r, 6r can be maintained.

In addition, since the rear end parts of the right and left plate springs 40, 40 are connected to the right and left axle cases 12, 12 holding the differential device 29 therebetween, a span between the connection points can be ensured sufficiently. Therefore, the casing 10 for the power unit 9 including the right and left axle cases 12, 12 functions effectively as a stabilizer to suppress excessive vertical vibrations of each rear wheel 6r, and even when the vehicle is running on a bumpy road surface, the ground-contact property of both the rear wheels 6r, 6r can be enhanced. For this reason, relatively thin plate springs 40, 40 can be used, and hence the weight of the suspension system 8 can be decreased.

Further, since the power unit 9 is mounted on the upper surfaces of the free end parts of the plate springs 40, 40 of the suspension system 8 which are cantilevered at the vehicle frame 2, during the running, the power unit 9 above the plate springs 40, 40 can be protected from stones jumping-up or muddy water coming from a road surface.

Still further, since the power unit 9 is constructed so as to be substantially symmetric in the longitudinal direction with respect to the vertical surface V including the rotating axis line of the differential case 17, the support portions for the power unit 9 of the plate springs 40, 40 can bear the weight of the power unit 9 with a good longitudinal balance, so that the power unit 9 can be supported stably.

Moreover, since the right and left plate springs 40, 40 whose front end parts are fixed to the support plate 36 are arranged in a chevron shape in the plan view so that the space therebetween increases toward the rear, and the casing 10 for the power unit 9 is connected to the rear end parts of the plate springs 40, 40, the support plate 36, the right and left plate springs 40, 40, and the casing 10 cooperate to form a closed trapezoidal structure which can exert a high rigidity against a lateral load, so that a high drag can be achieved against a lateral load acting on the rear wheels 6r, 6r.

Also, since the support plate 36 fixing the front end parts of the right and left plate springs 40, 40 is fixedly provided on the cross member 5 connecting the rear parts of the right and left main pipes 4, 4, the space between the front end parts of both the plate springs 40, 40 is selected in the range of lateral width of the right and left main pipes 4, 4, whereby the overall torsion characteristic of both the plate springs 40, 40, namely, the rolling characteristic of both the rear wheels 6r, 6r can be set freely, which makes the degree of freedom of design high.

The present invention is not limited to the above-described embodiment, and various design changes can be made without departing from the subject matter of the invention. For example, the front wheel 6f can be made one wheel.

## Claims

1. A small-sized electric vehicle in which a power unit (9) having an electric motor (15) and a speed reduction device (23) is supported on a vehicle body frame (2) via a suspension system (8) to drive right and left rear wheels (6r, 6r) while supporting them,
wherein the power unit (9) is constructed by connecting the electric motor (15), the speed reduction device (23) and a differential device (29) in succession;
wherein the right and left rear wheels (6r) are secured to right and left rear axles (25) connected to an output part of the differential device (29); and
wherein the suspension system (8) is constructed by a pair of right and left plate springs (40, 40) whose front end parts are fixed and cantilevered by the vehicle body frame (2) and the right and left plate springs are arranged so that a space there between increases toward the rear; wherein a casing (10) for the power unit (9) is being mounted and supported at the rear end part of the plate springs (40,40);
**characterised in that** the casing (10) for the power unit (9) is being mounted and supported on an upper surface of the rear end part of the plate springs (40, 40), so that the driving reaction force of the power unit (9) is only borne by the plate springs (40, 40).

2. A small-sized electric vehicle as claimed in claim 1, comprising a pair of right and left axle cases (12) which support the rear axles (25) and form a part of the casing (10) and which are disposed on the opposite sides of the differential device (29), the rear end parts of the pair of plate springs (40) being connected to the axle cases (12).

3. A small-sized electric vehicle as claimed in claim 1 or 2, wherein the casing (10) for the power unit (9) is mounted to the plate spring (40) via a damping member (46) so that the driving reaction force of the power unit (9) is borne by the plate spring (40).

## Patentansprüche

1. Elektrofahrzeug kleiner Größe, in welchem eine Leistungseinheit (9), die einen Elektromotor (15) und eine Geschwindigkeitsverringerungsvorrichtung (23) aufweist, an einem Karroserierahmen (2) über ein Aufhängungssystem (8) gehalten ist, um ein rechtes und ein linkes Hinterrad (6r, 6r) anzutreiben während es sie trägt, wobei die Leistungseinheit (9) durch Verbinden des Elektromotors (15), der Geschwindigkeitsverringerungsvorrichtung (23) und einer Differentialvorrichtung (29) in Folge aufeinander aufgebaut ist; wobei das rechte und das linke Hinterrad (6r) an einer rechten und einer linken Hinterachse (25) gesichert sind, die mit einem Ausgangsteil der Differentialvorrichtung (29) verbunden sind; und wobei das Aufhängungssystem (8) aus einem Paar aus einer rechten und einer linken Blattfeder (40, 40) aufgebaut ist, deren vordere Endteile vom Karroserierahmen (2) auskragend befestigt sind und die rechte und die linke Blattfeder derart angeordnet sind, dass ein Raum zwischen ihnen zum Heck hin zunimmt; wobei ein Gehäuse (10) für die Leistungseinheit (9) an dem hinteren Endteil der Blattfedern (40, 40) angebracht und gehalten ist; **dadurch gekennzeichnet, dass** das Gehäuse (10) für die Leistungseinheit (9) an einer oberen Fläche der hinteren Endteile der Blattfedern (40, 40) derart angebracht und gehalten ist, dass die Antriebsreaktionskraft der Leistungseinheit (9) lediglich von den Blattfedern (40, 40) aufgenommen wird.

2. Elektrofahrzeug kleiner Größe nach Anspruch 1, umfassend ein Paar von einem rechten und einem linken Achsgehäuse (12), welche die Hinterachsen (25) halten und einen Abschnitt des Gehäuses (10) bilden und die an den entgegengesetzten Seiten der Differentialvorrichtung (29) angeordnet sind, wobei die hinteren Endteile des Paares von Blattfedern (40) mit den Achsgehäusen (12) verbunden sind.

3. Elektrofahrzeug kleiner Größe nach Anspruch 1 oder 2, wobei das Gehäuse (10) für die Leistungseinheit (9) über ein Dämpfungselement (46) an der Blattfeder (40) derart angebracht ist, dass die Antriebsreaktionskraft der Leistungseinheit (9) von der Blattfeder (40) aufgenommen wird.

## Revendications

1. Véhicule électrique de petite taille dans lequel une unité de puissance (9) comportant un moteur électrique (15) et un dispositif de réduction de vitesse (23) est supportée sur une carrosserie de véhicule (2) par l'intermédiaire d'un système de suspension (8) pour entraîner les roues arrière droite et gauche (6r, 6r) tout en les supportant, dans lequel l'unité de puissance (9) est réalisée en reliant le moteur électrique (15), le dispositif de réduction de vitesse (23) et un dispositif différentiel (29) à la suite ;
dans lequel les roues arrière droite et gauche (6r) sont fixées à des axes arrière droit et gauche (25) reliés à une partie de sortie du dispositif différentiel (29) ; et
dans lequel le système de suspension (8) est réalisé par une paire de ressorts à lames droit et gauche (40, 40) dont les parties d'extrémité avant sont fixées et supportées en porte-à-faux par la carrosserie de véhicule (2) et les ressorts à lames droit et gauche sont agencés de sorte qu'un espace entre eux augmente vers l'arrière ; dans lequel un carter (10) pour l'unité de puissance (9) est monté et supporté au niveau de la partie d'extrémité arrière des ressorts à lames (40, 40) ;
**caractérisé en ce que** le carter (10) pour l'unité de puissance (9) est monté et supporté sur une surface supérieure de la partie d'extrémité arrière des ressorts à lames (40, 40), de sorte que la force de réaction d'entraînement de l'unité de puissance (9) n'est supportée que par les ressorts à lames (40, 40).

2. Véhicule électrique de petite taille selon la revendication 1, comprenant une paire de logements d'axes droit et gauche (12) qui supportent les axes arrière (25) et font partie du carter (10) et qui sont disposés sur les côtés opposés du dispositif différentiel (29), les parties d'extrémité arrière de la paire de ressorts à lames (40) étant reliées aux logements d'axes (12).

3. Véhicule électrique de petite taille selon la revendication 1 ou 2, dans lequel le carter (10) pour l'unité de puissance (9) est monté sur le ressort à lames (40) par l'intermédiaire d'un élément d'amortissement (46) de sorte que la force de réaction d'entraînement de l'unité de puissance (9) est supportée par le ressort à lames (40).
